# FASCICULE DE BREVET EUROPEEN

(11) **EP 3 711 915 B1**
(45) Date de publication et mention de la délivrance du brevet: **08.11.2023**
(21) Numéro de dépôt: 20164464.8
(22) Date de dépôt: 20.03.2020
(51) Int. Cl.: B29C 70/38, B29C 70/32, B29C 53/58, B29C 53/62, B29C 53/84, B28B 23/14, B29C 53/56

(54) **MÉTHODE DE FABRICATION DE PIÈCE DE RÉVOLUTION EN MATÉRIAU COMPOSITE**
HERSTELLUNGSMETHODE FÜR EIN DREHTEIL AUS VERBUNDMATERIAL
METHOD FOR MANUFACTURING A ROTATING PART MADE OF A COMPOSITE MATERIAL

(30) Priorité: 21.03.2019 FR 1902928
(43) Date de publication de la demande: 23.09.2020
(73) Titulaire: Centre Technique Des Industries Mecaniques, 60300 Senlis (FR)
(72) Inventeur: TOMASI, Richard, 44000 Nantes (FR); MASTAIN, Didier, 44000 Nantes (FR); MASSON, Cédric, 44620 La Montagne (FR)
(74) Mandataire: Fédit-Loriot

(56) Documents cités:
- EP-A1- 1 211 052
- WO-A1-00/15416
- WO-A1-98/07523
- WO-A1-2012/118378
- WO-A1-2017/134453
- DE-A1-102015 105 830
- FR-A1- 2 766 407
- US-A- 5 575 875
- US-A- 5 575 875

## Description

La présente invention se rapporte à une méthode de fabrication de pièce de révolution en matériau composite.

Les méthodes bien connues, dites « *d'enroulement filamentaire »* consistent à enrouler des fibres continues pré-imprégnées d'un polymère à l'état visqueux autour d'un arbre jouant alors le rôle d'une partie intérieure de moule. L'arbre est entraîné en rotation, tandis que les fibres continues sont guidées d'avant en arrière, de manière à pouvoir être enroulées de façon croisée et de façon uniforme.

Par exemple, les fibres continues sont pré-imprégnées d'un polymère thermoplastique rendu visqueux par des moyens thermiques, et elles sont enroulées autour de l'arbre comme indiqué ci-dessus. Le polymère thermoplastique redevient solide en refroidissant et en revenant à la température ambiante. Il forme ainsi avec les fibres une pièce creuse d'un matériau composite que l'on vient extraire de l'arbre ensuite. Il est bien connu de réaliser ainsi des réservoirs spéciaux aptes à résister à de fortes pressions.

Aussi, des méthodes de thermoformage permettent au moyen d'une presse et d'une pluralité de préformes en matériau composite thermoplastique, de conformer des pièces composites. Les préformes sont prédécoupées dans des plaques de matériau composite, faites d'un polymère thermoplastique et de fibres de renfort noyées à l'intérieur du polymère. On agence les préformes les unes par rapport aux autres et on leur apporte ensuite de l'énergie thermique afin de porter le polymère thermoplastique dans son état visqueux. Puis on procède à l'estampage de ces préformes dans la presse selon une conformation prédéterminée.

De telles méthodes de thermoformage sont très mal adaptées à la réalisation de pièces de révolution.

Aussi, certaines pièces complexe résultent de l'assemblage d'une première pièce composite de révolution obtenue grâce à une méthode de type « *enroulement filamentaire»* et d'une seconde pièce obtenue selon une méthode de thermoformage.

La fabrication de telles pièces complexes requiert ainsi la mise en oeuvre de deux méthodes de fabrication, puis d'une phase d'assemblage, ce qui les rend coûteuses à réaliser.

D'autres pièces complexes, par exemple des cadres de raquettes, sont obtenues, tout d'abord en réalisant une préforme de raquette par enroulement filamentaire à froid d'une mèche de fibres et de matière thermoplastique. La préforme est ensuite insérée dans un moule pour être pressée à chaud. Là encore, deux opérations successives sont nécessaires. On pourra se référer au document US 5 575 875 A, lequel divulgue la réalisation d'un tel type de pièce Par ailleurs, le document FR 2766407A divulgue une méthode de fabrication selon le préambule de la revendication 1.

Aussi, un problème qui se pose et que vise à résoudre la présente invention est de fournir une méthode de fabrication qui permette de simplifier la fabrication de pièces complexes en matériau composite et ainsi d'en réduire les coûts.

Dans le but de résoudre ce problème, il est proposé une méthode de fabrication de pièce de révolution en matériau composite comprenant les étapes suivantes : a) on fournit une pluralité de préformes en matériau composite, ledit matériau composite présentant une matrice thermoplastique et des fibres de renfort noyées à l'intérieur de ladite matrice ; b) on fournit un support rotatif s'étendant longitudinalement et on applique les préformes de ladite pluralité de préformes en matériau composite autour dudit support rotatif ; c) on fournit un ruban thermoplastique et on applique localement dans une zone d'application ledit ruban thermoplastique contre lesdites préformes selon une direction transversale par rapport audit support rotatif ; et, d) on entraîne ledit support rotatif en rotation et on guide ledit ruban thermoplastique pour enrouler ledit ruban thermoplastique en hélice autour dudit support, tandis qu'on fournit de l'énergie thermique localement audit ruban thermoplastique et auxdites préformes en amont de ladite zone d'application de manière à thermoformer lesdites préformes et à solidariser ledit ruban thermoplastique avec lesdites préformes.

Ainsi, une caractéristique de l'invention réside par la mise en oeuvre d'un support rotatif faisant fonction de moule intérieur notamment pour les préformes et d'une méthode d'enroulement d'un ruban thermoplastique selon une méthode de type « *enroulement filamentaire»* de manière à pouvoir enrouler le ruban thermoplastique autour des préformes pour obtenir la pièce complexe de révolution à réaliser. Grâce à l'énergie thermique apportée localement au ruban thermoplastique et aux préformes dans la zone d'application, le polymère thermoplastique du ruban et le polymère thermoplastique des préformes sont rendus visqueux, de sorte que l'appui local du ruban permet d'une part, de relier entre elles les préformes et de les conformer sur le support rotatif, et d'autre part, de relier le ruban aux préformes. On observera que le support rotatif présente à la périphérie, des empreintes d'une forme prédéterminée pour mouler l'intérieur de la pièce complexe.

De la sorte, on réalise une pièce complexe de révolution en matériau composite en une seule opération, et partant, à un coût réduit.

Aussi, et selon un mode de mise en oeuvre de l'invention particulièrement avantageux, on fournit, à l'étape c), un ruban thermoplastique comprenant des fibres longues. Ainsi, le ruban thermoplastique offre une meilleure résistance mécanique à l'allongement, notamment lorsque le polymère thermoplastique est porté à l'état visqueux. De la sorte, le serrage des préformes contre le support rotatif est plus efficace et partant, leur conformation également.

Préférentiellement, on fournit à l'étape b), un support rotatif chauffant. De la sorte, le support rotatif fournit de l'énergie thermique supplémentaire aux préformes, du côté de leur face d'appui sur le support rotatif, et permet alors de rendre encore plus aisé est plus rapide le thermoformage de celle-ci. Une telle mise en oeuvre est particulièrement indiquée lorsque plusieurs couches de préformes sont superposées.

Selon un mode de réalisation de l'invention particulièrement avantageux, on fournit à l'étape d), de l'énergie thermique localement par rayonnement au moyen d'un laser. Ainsi, au moyen d'un guide d'onde de type fibre optique, on focalise un rayonnement laser sur la bande thermoplastique et sur les préformes en amont de la zone dans laquelle ils sont mis en contact, de manière à porter le polymère thermoplastique qui les constitue à leur température de fusion. Grâce au laser, qui interagit avec les polymères thermoplastiques, on obtient une fusion rapide et localisée.

Par ailleurs, et selon un mode préféré de mise en oeuvre de l'invention, on guide à l'étape d) ledit ruban thermoplastique de manière à enrouler ledit ruban thermoplastique en spires jointives pour lier entre elles lesdites spires. Ainsi, on lie non seulement les spires avec les préformes mais aussi, les spires entre elles de manière à former une seule pièce après refroidissement des polymères thermoplastiques. On obtient ainsi une paroi de pièces homogène et très rigide mécaniquement. On observera que la mise en oeuvre de spires jointives du ruban thermoplastique sur les préformes, constituant alors une première couche du ruban thermoplastique, n'exclut nullement la mise en oeuvre de secondes spires jointives du ruban thermoplastique sur ladite première couche, dans un sens inverse. De surcroît, dans certaines situations, il n'est nul besoin de former des spires jointives ou à tout le moins sur certaines portions de préforme.

En outre, on fournit avantageusement à l'étape b) un support rotatif démontable. Plus précisément, le support rotatif démontable définissant une enveloppe géométrique déterminée lorsqu'il est monté, on prévoit un agencement qui permet un démontage à l'intérieur de cette même enveloppe et avantageusement, qui autorise une convergence des éléments du support vers le centre de cette enveloppe de manière à dégager aisément la pièce complexe en matériau composite.

Aussi, avantageusement, on solidarise à l'étape b) lesdites préformes appliquées audit support rotatif. De la sorte, lesdites préformes demeurent solidaires du support rotatif avant que le ruban thermoplastique ne les ait recouvertes.

De plus, et selon encore un autre mode de mise en oeuvre, on fournit en outre à l'étape a), au moins une préforme mixte comportant une préforme en matériau composite associée à une pièce métallique. La pièce métallique peut être en acier, en aluminium, en titane ou en tout autre matériau apte à subir un traitement de surface de type texturation. Un tel traitement permet de générer des anfractuosités à la surface de la pièce, lesquelles anfractuosités peuvent recevoir les fibres du matériau composite lorsque la matrice polymère se ramollit et que le composite et la pièce sont pressés l'un contre l'autre. De la sorte, la pièce complexe de révolution obtenue peut présenter des zones de fixation pratiquées dans la partie métallique, pour pouvoir intégrer ladite pièce dans un ensemble mécanique, par exemple par soudage, vissage, rivetage ou tout autre type d'assemblage conventionnel.

Préférentiellement, en surplus des préformes, on fournit à l'étape a) des éléments métalliques présentant au moins une portion de surface texturée et on applique lesdits éléments métalliques et les préformes autour dudit support rotatif, de façon qu'au moins une partie de ladite au moins une portion de surface texturée soit en contact avec au moins une préforme. De la sorte, lorsque l'on enroule ledit ruban thermoplastique en hélice autour dudit support, tandis qu'on fournit de l'énergie thermique localement audit ruban thermoplastique et auxdites préformes on vient non seulement thermoformer lesdites préformes, mais aussi, comprimer ensemble les éléments métalliques et les préformes de façon à ce que la portion de surface texturée s'y incruste. D'autres parties texturées de ladite au moins une portion de surface texturée peuvent recevoir le ruban thermoplastique. Lorsque le ruban thermoplastique comporte des fibres de renfort, ces dernières viennent alors en prise dans les anfractuosités des autres parties texturées. Après refroidissement, les éléments métalliques sont parfaitement solidaires des préformes thermoformées et du ruban thermoplastique qui les entoure.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique de face d'une partie de l'installation convenant à la mise en oeuvre de l'invention:
[Fig. 2] est une vue schématique partielle de côté d'une autre partie de l'installation;
[Fig. 3] est une vue schématique de détail de l'objet de la figure [Fig. 2] ; et,
[Fig. 4] est un organigramme de la méthode de fabrication mise en oeuvre grâce à l'installation représentée sur les figures [Fig. 1] - [Fig. 3].

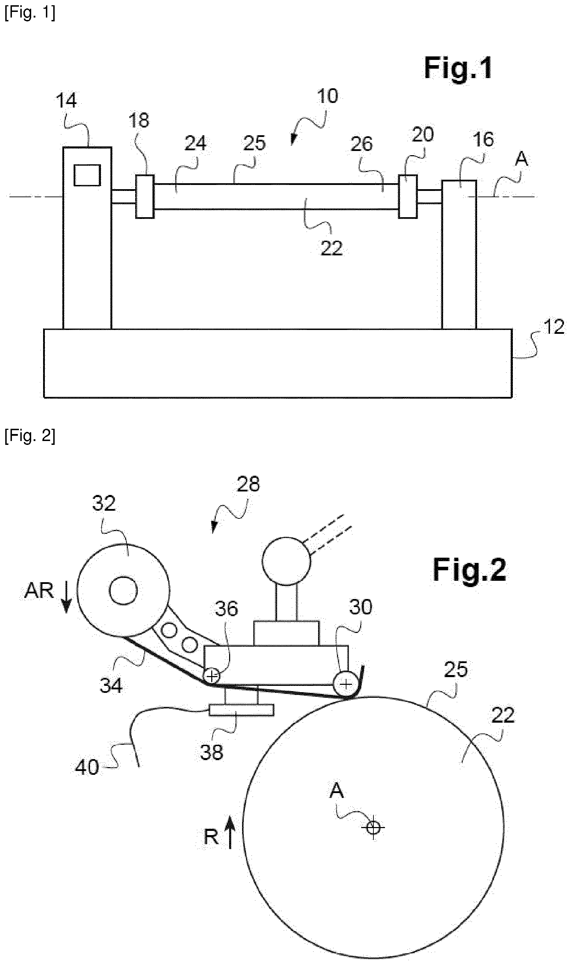

La Figure 1 montre de face un banc de travail 10 présentant un châssis 12 comprenant deux potences en regard, l'une motrice 14, l'autre passive 16. La potence motrice 14 présente un mandrin moteur 18, tandis que la potence passive 16 présente un mandrin libre en rotation 20. Les deux mandrins 18, 20 s'étendent en regard l'un de l'autre de manière coaxiale.

Aussi, entre les mandrins 18, 20, est installé un support rotatif 22, sur la figure un cylindre de révolution longitudinal d'axe de symétrie A et présentant deux extrémités opposées 24, 26 ainsi qu'une surface externe 25. Ses deux extrémités opposées 24, 26 sont respectivement en prise dans le mandrin moteur 18 et dans le mandrin libre 20. En outre, le support rotatif 22 est avantageusement équipé de moyens de chauffage internes, non représentés, permettant de chauffer sa surface externe 25. Ces moyens de chauffage sont par exemple des résistances électriques alimentées par l'intermédiaire de bagues collecteurs en arrière des mandrins 18, 20.

Comme on l'expliquera ci-après, le support rotatif 22 constitue une paroi de moule sur laquelle on viendra mouler des pièces. Aussi, le support rotatif 22 n'est pas nécessairement un cylindre de révolution. Il peut par exemple présenter une forme cylindrique convexe quelconque, ou bien même une aile d'avion ou encore une pale d'éolienne.

Ainsi, grâce à la potence motrice 14, le support rotatif 22 est adapté à être entraîné en rotation autour d'un axe de symétrie coaxiales à ceux des deux mandrins 18, 20.

On retrouve sur la figure [Fig. 2] le support rotatif 22 vu en coupe droite et un applicateur 28 s'étendant transversalement par rapport au support rotatif 22 et porté par un robot non représenté.

L'applicateur 28 comprend à l'une de ses extrémités un galet d'appui 30, tandis qu'à l'opposé, il comprend une bobine de réception 32. Le galet d'appui 30 est ici porté en appui contre le support rotatif 22 et son axe de rotation est sensiblement incliné par rapport à l'axe de rotation A du support 22 comme on l'expliquera ci-après.

Sur la bobine de réception 32, est enroulé un ruban thermoplastique 34 renforcé ici de fibres de verre. Le ruban thermoplastique 34 présente une matrice polymère, par exemple en polyamide. D'autres polymères thermoplastiques peuvent être avantageusement mis en oeuvre, par exemple le Polyétheréthercétone (PEEK) ou bien encore le Polyéthercétonecétone (PEKK). La bobine de réception 32 présente un axe de rotation parallèle à l'axe du galet d'appui 30, et le ruban thermoplastique 34 s'étend de la bobine de réception 32, jusqu'au galet d'appui 30 par l'intermédiaire d'un galet de renvoi 36. Ainsi, le ruban thermoplastique 34 est ici pressé à plat contre la surface externe 25 du support 22 par l'intermédiaire du galet d'appui 30. Aussi, le support 22 est adapté à être entraîné en rotation selon le sens horaire R tel que représenté sur la figure [Fig. 2]. Partant, le ruban thermoplastique 34 peut venir s'enrouler sur la surface externe 25, tandis que la bobine de réception 32 se dévide dans le sens anti-horaire AR.

Par ailleurs, l'applicateur 28 comporte un dispositif laser 38 permettant de focaliser un rayon laser guidé par une fibre optique 40, dans l'angle formé par le ruban thermoplastique 34 et la surface externe 25 du support 22, en amont du galet d'appui 30. Le dispositif laser 38 permet alors de fournir de l'énergie thermique au ruban thermoplastique 34 de manière à ce que la matrice polymère thermoplastique puisse être portée en fusion, comme on va l'expliquer ci-après.

Au surplus, l'applicateur 28 est équipé d'une caméra thermique non représentée et orientée précisément vers l'angle formé par le ruban thermoplastique 34 et la surface externe 25, de manière à pouvoir régler l'intensité du dispositif laser 38.

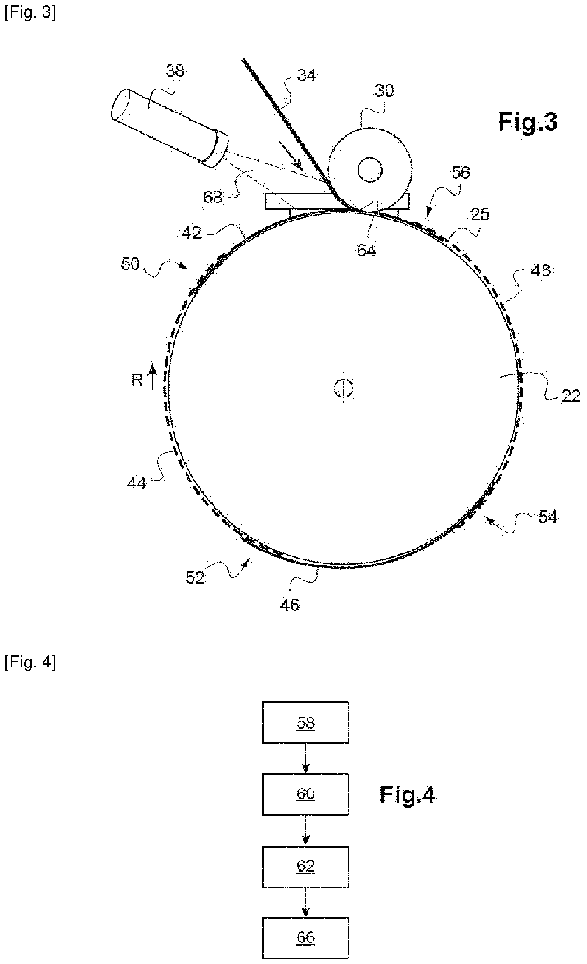

On se reportera à présent sur la figure [Fig. 3] illustrant plus en détail le support 22, le dispositif laser 38, le ruban thermoplastique 34 et le galet d'appui 30, représentés sur la figure [Fig. 2], ainsi que des préformes, une première 42, une deuxième 44, une troisième 46 et une quatrième 48 appliquées contre la surface externe 25 du support rotatif 22.

Les préformes 42, 44, 46, 48 sont des plaque de matériau composite, faites d'un matériau polymère en tant que matrice et de fibres étendues longitudinalement à l'intérieur de la matrice et formant renfort. Le matériau polymère est par exemple un polyamide ou bien le Polyétheréthercétone (PEEK), ou encore le Polyéthercétonecétone (PEKK).

Dans l'exemple présenté sur la figure [Fig. 3], les quatre préformes 42, 44, 46, 48 se chevauchent dans quatre zones de chevauchements successives, une première 50, une deuxième 52, une troisième 54 et une quatrième 56. Bien entendu, tant la disposition des préformes 42, 44, 46, 48 les unes par rapport aux autres, que la forme cylindrique de révolution du support 22 et partant de sa surface externe 25, ne sont données qu'à titre illustratif pour une bonne compréhension du procédé selon l'invention que l'on décrira plus en détail en complément avec la figure [Fig. 4] qui en est un organigramme.

Ainsi, selon une première étape 58 on fournit la pluralité de préformes 42, 44, 46, 48 en matériau composite. Ensuite, selon une deuxième étape 60 on fournit le support rotatif 22 et on applique les préformes 42, 44, 46, 48 autour dudit support rotatif 22, en appui contre la surface externe 25 selon des positions relatives prédéfinies, comme illustré sur la figure [Fig. 3]. Aussi, on prévoit des organes de fixation temporaire des préformes 42, 44, 46, 48 sur la surface externe 25 du support 22, par exemple des ventouses ou bien des ergots adaptés. Puis, selon une troisième étape 62 on fournit le ruban thermoplastique 34 et on applique localement dans une zone d'application 64 le ruban thermoplastique 34 contre l'une 42 des préformes 42, 44, 46, 48 selon une direction transversale par rapport au support rotatif 22.

Ensuite, selon une quatrième étape 66, on entraîne le support rotatif 22 en rotation selon la flèche R et on guide le ruban thermoplastique 34 en maintenant l'applicateur 28 illustré sur la figure [Fig. 2] sensiblement incliné par rapport à l'axe de symétrie A du support rotatif 22, pour pouvoir enrouler le ruban thermoplastique 24 en hélice autour du support rotatif 22.

Au surplus, durant cette quatrième étape 66, on fournit localement en amont de la zone d'application 64 et grâce au dispositif laser 38 et a un faisceau laser 68 qu'il forme, de l'énergie thermique au ruban thermoplastique 34 et à la préforme 42.

Conséquemment, tant le polymère thermoplastique de la préforme 42, que celui du ruban thermoplastique 34 sont portés à des températures voisines de celles de leur fusion, de sorte que, d'une part la préforme 42 se ramollit et vient épouser parfaitement la forme cylindrique de la surface externe 25 du support 22, et d'autre part le ruban thermoplastique 34 vient adhérer à la surface de la préforme 42, grâce au galet d'appui 30 qui vient comprimer le ruban thermoplastique 34 contre la préforme 42.

De surcroît, le support rotatif 22 poursuivant sa rotation, lorsque le faisceau laser 68 vient à balayer la première zone de chevauchement 50, il le provoque la mise en fusion, non seulement du polymère de la première préforme 42, mais aussi celui de la deuxième préforme 44, de sorte qu'au passage du galet d'appui 30, les deux préformes 42, 44 se soudent l'une avec l'autre dans la première zone de chevauchement 50. Et bien évidemment, le ruban thermoplastique 34 vient également adhérer sur la première zone de chevauchement 50.

La zone de chevauchement 50 peut être relativement épaisse, et par conséquent le seul faisceau laser 68 peut se révéler insuffisant pour porter en fusion le polymère de la première préforme 42 glissée sous la deuxième 44. Aussi, grâce aux moyens de chauffage internes au support rotatif 22, on pallie ce défaut de chauffage.

Le support rotatif 22 poursuivant alors sa rotation, et l'applicateur 28 procédant au thermoformage des, deuxième 44, troisième 46 et quatrième 48 préformes tout en procédant à leur soudure entre elles respectivement dans les zones de chevauchement 52, 54, 56, au bout d'un tour complet, et grâce à l'inclinaison sensible de l'applicateur 28 par rapport au support rotatif 22, le bord du ruban thermoplastique 34 vient alors s'appliquer sur la bordure de la première spire qui vient d'être réalisée tout autour des quatre préformes 42, 44, 46, 48. Conséquemment, la rotation du support rotatif 22 peut être poursuivie jusqu'au recouvrement complet des préformes 42, 44, 46, 48 sur une longueur prédéterminée du support rotatif 22.

Après refroidissement des polymères, on obtient de la sorte, un cylindre composite fait de quatre préformes 42, 44, 46, 48 composites recouvertes hélicoïdalement d'un ruban thermoplastique 34, lui-même composite.

Une telle forme cylindrique de section circulaire peut présenter un intérêt limité. En revanche, sa description permet une parfaite compréhension du procédé selon l'invention.

Ainsi, il est tout à fait possible selon cette méthode de recouvrir une âme correspondant par exemple à une pale d'éolienne, où des préformes sont superposées au niveau du bord d'attaque, tandis qu'une simple préforme est étendue au niveau du bord de fuite.

Aussi, selon une variante de réalisation, on associe aux préformes des inserts métalliques, par exemple en acier, présentant des portions de surface texturée de manière à pouvoir mieux adhérer aux préformes et au ruban thermoplastique lorsque l'on fournit l'énergie thermique et que l'on enroule le ruban thermoplastique autour. De tels inserts métalliques installés dans des zones prédéfinies, permettent de relier les pièces complexes composites obtenues conformément à l'invention, à des ensembles métalliques par soudure des seuls inserts sur ces ensembles métalliques.

Ainsi, ce procédé permet de marier deux technologies, le thermoformage et la technologie dite « *d'enroulement filamentaire »* pour fabriquer directement des pièces complexes en matériau composite à des coûts très avantageux.

## Revendications

1. Méthode de fabrication de pièce de révolution en matériau composite comprenant les étapes suivantes :
- a) on fournit une pluralité de préformes (42, 44, 46, 48) en matériau composite, ledit matériau composite présentant une matrice thermoplastique et des fibres de renfort noyées à l'intérieur de ladite matrice ;
- b) on fournit un support rotatif (22) s'étendant longitudinalement et on applique les préformes (42, 44, 46, 48) de ladite pluralité de préformes en matériau composite autour dudit support rotatif (22) ;
- c) on fournit un ruban thermoplastique (34) et on applique localement dans une zone d'application (64) ledit ruban thermoplastique (34) contre lesdites préformes (42, 44, 46, 48) selon une direction transversale par rapport audit support rotatif (22) ; et,
- d) on entraîne ledit support rotatif (22) en rotation et on guide ledit ruban thermoplastique (34) pour enrouler ledit ruban thermoplastique (34) en hélice autour dudit support (22), **caractérisée en ce que** pendant l'étape d) on fournit de l'énergie thermique localement audit ruban thermoplastique (34) et auxdites préformes (42, 44, 46, 48) en amont de ladite zone d'application (64) de manière à thermoformer lesdites préformes (42, 44, 46, 48) et à solidariser ledit ruban thermoplastique (34) avec lesdites préformes (42, 44, 46, 48).

2. Méthode de fabrication selon la revendication 1, **caractérisée en ce qu'**à l'étape c) on fournit un ruban thermoplastique (34) comprenant des fibres longues.

3. Méthode de fabrication selon la revendication 1 ou 2, **caractérisée en ce qu'**à l'étape b) on fournit un support rotatif (22) chauffant.

4. Méthode de fabrication selon l'une quelconque des revendications 1 à 3, **caractérisée en ce qu'**à l'étape d) on fournit de l'énergie thermique localement par rayonnement au moyen d'un laser (38).

5. Méthode de fabrication selon l'une quelconque des revendications 1 à 4, **caractérisée en ce qu'**à l'étape d) on guide ledit ruban thermoplastique (34) de manière à enrouler ledit ruban thermoplastique (34) en spires jointives pour lier entre elles lesdites spires.

6. Méthode de fabrication selon l'une quelconque des revendications 1 à 5, **caractérisée en ce qu'**à l'étape b) on fournit un support rotatif (22) démontable.

7. Méthode de fabrication selon l'une quelconque des revendications 1 à 6, **caractérisée en ce qu'**à l'étape b) on solidarise lesdites préformes (42, 44, 46, 48) appliquées audit support rotatif (22).

8. Méthode de fabrication selon l'une quelconque des revendications 1 à 7, **caractérisée en ce qu'**à l'étape a) on fournit en outre, au moins une préforme mixte comportant une préforme en matériau composite associée à une pièce métallique.

## Patentansprüche

1. Verfahren zum Herstellen eines Drehteils aus Verbundmaterial, umfassend die folgenden Schritte:
- a) Bereitstellen einer Vielzahl von Vorformlingen (42, 44, 46, 48) aus Verbundmaterial, wobei das Verbundmaterial eine thermoplastische Matrix und in der Matrix eingebettete Verstärkungsfasern aufweist;
- b) Bereitstellen eines Drehträgers (22), der sich in Längsrichtung erstreckt, und Anbringen der Vorformlinge (42, 44, 46, 48) der Vielzahl von Vorformlingen aus Verbundmaterial um den Drehträger (22) herum;
- c) Bereitstellen eines thermoplastischen Bands (34) und lokales Anbringen des thermoplastischen Bands (34) in einem Anwendungsbereich (64) an den Vorformlingen (42, 44, 46, 48) in einer Richtung quer zum Drehträger (22); und,
- d) Versetzen des Drehträgers (22) in Drehung und Führen des thermoplastischen Bands (34), um das thermoplastische Band (34) spiralförmig um den Träger (22) zu wickeln, **dadurch gekennzeichnet, dass** während des Schritts d) das thermoplastische Band (34) und die Vorformlinge (42, 44, 46, 48) vor dem Anwendungsbereich (64) lokal mit thermischer Energie versorgt werden, um die Vorformlinge (42, 44, 46, 48) thermozuformen und das thermoplastische Band (34) an den Vorformlingen (42, 44, 46, 48) zu befestigen.

2. Herstellungsverfahren nach Anspruch 1, **dadurch gekennzeichnet, dass** in Schritt c) ein thermoplastisches Band (34), das lange Fasern umfasst, bereitgestellt wird.

3. Herstellungsverfahren nach Anspruch 1 oder 2, **dadurch gekennzeichnet, dass** in Schritt b) ein beheizter Drehträger (22) bereitgestellt wird.

4. Herstellungsverfahren nach einem der Ansprüche 1 bis 3, **dadurch gekennzeichnet, dass** in Schritt d) lokal thermische Energie durch Strahlung mittels eines Lasers (38) bereitgestellt wird.

5. Herstellungsverfahren nach einem der Ansprüche 1 bis 4, **dadurch gekennzeichnet, dass** in Schritt d) das thermoplastische Band (34) so geführt wird, dass das thermoplastische Band (34) in aneinandergrenzenden Windungen gewickelt wird, um die Windungen miteinander zu verbinden.

6. Herstellungsverfahren nach einem der Ansprüche 1 bis 5, **dadurch gekennzeichnet, dass** in Schritt b) ein abnehmbarer Drehträger (22) bereitgestellt wird.

7. Herstellungsverfahren nach einem der Ansprüche 1 bis 6, **dadurch gekennzeichnet, dass** in Schritt b) die Vorformlinge (42, 44, 46, 48), die auf den Drehträger (22) aufgebracht werden, befestigt werden.

8. Herstellungsverfahren nach einem der Ansprüche 1 bis 7, **dadurch gekennzeichnet, dass** in Schritt a) außerdem mindestens ein gemischter Vorformling bereitgestellt wird, der einen Vorformling aus Verbundmaterial umfasst, der mit einem Metallstück verbunden ist.

## Claims

1. A method for manufacturing a revolution part made of composite material comprising the following steps:
- a) a plurality of preforms (42, 44, 46, 48) made of composite material are provided, said composite material having a thermoplastic matrix and reinforcing fibres embedded inside said matrix;
- b) a longitudinally extending rotary support (22) is provided and the preforms (42, 44, 46, 48) of said plurality of preforms made of composite material are applied around said rotary support (22);
- c) a thermoplastic strip (34) is provided and said thermoplastic strip (34) is locally applied in an application area (64) against said preforms (42, 44, 46, 48) in a direction transverse to said rotary support (22); and,
- d) said rotary support (22) is driven in rotation and said thermoplastic strip (34) is guided to helically wind said thermoplastic strip (34) around said support (22), **characterised in that** during step d), thermal energy is locally supplied to said thermoplastic strip (34) and to said preforms (42, 44, 46, 48) upstream of said application area (64) so as to thermoform said preforms (42, 44, 46, 48) and to secure said thermoplastic strip (34) with said preforms (42, 44, 46, 48) .

2. The manufacturing method according to claim 1, **characterised in that** in step c), a thermoplastic strip (34) comprising long fibres is provided.

3. The manufacturing method according to claim 1 or 2, **characterised in that** in step b), a rotary heating support (22) is provided.

4. The manufacturing method according to any one of claims 1 to 3, **characterised in that** in step d) thermal energy is locally supplied by radiation by means of a laser (38).

5. The manufacturing method according to any one of claims 1 to 4, **characterised in that** in step d) said thermoplastic strip (34) is guided so as to wind said thermoplastic strip (34) into contiguous coils to bind said coils to each other.

6. The manufacturing method according to any one of claims 1 to 5, **characterised in that** in step b), a removable rotary support (22) is provided.

7. The manufacturing method according to any one of claims 1 to 6, **characterised in that** in step b), said preforms (42, 44, 46, 48) applied to said rotary support (22) are secured.

8. The manufacturing method according to any one of claims 1 to 7, **characterised in that** in step a), at least one mixed preform including a preform made of composite material which is associated with a metal part is also provided.
